# FASCICULE DE BREVET EUROPEEN

(11) **EP 4 565 456 B1**
(45) Date de publication et mention de la délivrance du brevet: **16.09.2026**
(21) Numéro de dépôt: 23737997.9
(22) Date de dépôt: 03.07.2023
(51) Int. Cl.: B60R 9/045, B60R 9/058

(54) **DISPOSITIF DE BARRE DE TOIT D'UN VÉHICULE COMPRENANT UNE BARRE DÉMONTABLE ET DES MOYENS DE FIXATION DE LA BARRE VERROUILLABLES/DÉVERROUILLABLES**
FAHRZEUGDACHSTANGENVORRICHTUNG MIT ABNEHMBAREM RIEGEL UND ARRETIERBARER/ENTRIEGELBARER VORRICHTUNG ZUR BEFESTIGUNG DER STANGE
VEHICLE ROOF BAR DEVICE COMPRISING A REMOVABLE BAR AND LOCKABLE/UNLOCKABLE MEANS FOR ATTACHING THE BAR

(30) Priorité: 01.08.2022 FR 2207954
(43) Date de publication de la demande: 11.06.2025
(73) Titulaire: Renault s.a.s, 92100 Boulogne Billancourt (FR)
(72) Inventeur: ILIE, Ionut-Octav, 062203 Bucarest (RO)
(86) Numéro de dépôt international: PCT/EP2023/068229
(87) Numéro de publication internationale: WO 2024/028011

(56) Documents cités:
- US-A1- 2021 046 881
- US-B2- 11 027 660

## Description

L'invention concerne dans le domaine des véhicules automobiles, les systèmes de porte-bagages de toit convertibles.

Les systèmes actuels des porte-bagages demandent d'utiliser des outils pour repositionner les barres de toit par exemple d'une position longitudinale vers une position latérale ou inversement. Ce qui implique un processus long et souvent compliqué.

La demande de brevet US 11 027660-A1 décrit un porte-bagage de toit pour un véhicule automobile qui comprend des barres déployables qui peuvent être installées latéralement en mode inutilisé ou transversalement en mode opérationnel, grâce à un système de support comprenant une paire de structures de support avant et une paire de structures de support arrière coopérant avec une paire de barres démontables. Afin de permettre le déploiement des barres de toit, chaque barre comporte un module de verrouillage en une première extrémité de la barre et un module de pivot en une deuxième extrémité de la barre. Le module de verrouillage peut comprendre un boîtier, une poignée, et un crochet comme élément de verrouillage. Un ressort de torsion est positionné à l'intérieur du boîtier et comprend des portions de branche qui viennent en butée contre une portion du boîtier et du crochet de verrouillage, ce qui positionne l'élément de verrouillage en une position de verrouillage. Le module de pivotement est couplé à l'une des paires de structures de support pour permettre un mouvement de pivotement aux deux barres entre une position transversale en mode opérationnel et une position latérale en mode inutilisé. L'invention vise à proposer un dispositif de barres de toit alternatif à ceux de l'art antérieur, permettant facilement de disposer une barre de toit en position transversale ou longitudinale sur le toit d'un véhicule, notamment pour former un porte-bagage de toit d'un véhicule automobile.

A cet effet, l'invention fournit un dispositif de barre de toit qui comprend une barre de toit démontable et un premier moyen de fixation verrouillable/déverrouillable de l'une des extrémités de la barre et un deuxième moyen de fixation verrouillable/déverrouillable de l'autre extrémité de la barre.

Selon l'invention, chaque moyen de fixation verrouillable/déverrouillable comprend un support de fixation comprenant :
- un corps s'étendant longitudinalement entre une extrémité distale et une extrémité opposée proximale d'une extrémité de la barre, ladite extrémité proximale comportant une platine réceptrice d'une extrémité de la barre,
- une poignée de manœuvre supportée par le corps dudit support, montée mobile en rotation autour d'un axe perpendiculaire au support entre une position abaissée de verrouillage et une position relevée de déverrouillage, et
- un bras de pression logé dans le corps dudit support, mobile solidairement à la poignée de manœuvre, et
- une cale de verrouillage/déverrouillage mobile en translation longitudinale solidairement audit bras de pression, comportant une partie apte à s'étendre au moins partiellement en surface de la platine et qui comprend une rainure traversante longitudinale s'étendant entre une extrémité de butée et une extrémité ouverte évasée, la cale comprenant une face inférieure comportant un relief de verrouillage/déverrouillage bordant ladite rainure.

De plus chaque moyen de fixation verrouillable/déverrouillable comprend une goupille de verrouillage/déverrouillage, située en l'une des extrémités de la barre, comportant un axe muni en son extrémité inférieure d'une tête plus large que les dimensions transverses dudit axe, ledit axe s'étendant verticalement dans la barre, selon une direction perpendiculaire à la direction longitudinale de la barre, et passant à travers un orifice traversant (dans la paroi inférieure de la barre) débouchant au-dessus de la platine du support de fixation, de sorte que la tête de la goupille est hors de la barre et apte à se positionner au niveau de la rainure de la cale de verrouillage pour être apte à coopérer avec ledit relief de verrouillage/déverrouillage et à occuper une position de verrouillage dans l'extrémité de butée de la rainure de la cale ou une position de déverrouillage dans l'extrémité ouverte évasée de la rainure. Chaque moyen de fixation verrouillable/déverrouillable comprend aussi un organe élastique de compression permettant un mouvement de translation verticale, selon une direction perpendiculaire à la direction longitudinale de la barre, de la goupille de verrouillage/déverrouillage.

Selon l'invention, l'axe perpendiculaire au support de rotation, par rapport auquel la poignée de manœuvre d'un moyen de fixation verrouillable/déverrouillable est mobile entre une position abaissée de verrouillage et une position relevée de déverrouillage, est proximal de la platine du support pour ce qui concerne la poignée du premier moyen de fixation, et est proximal de l'extrémité distale du support pour ce qui concerne la poignée du deuxième moyen de fixation.

L'invention permet que la cale de verrouillage/déverrouillage puisse être déplacée d'avant en arrière lors d'une action sur la poignée de manœuvre. La forme évasée de la cale permet de saisir la goupille de verrouillage dans la rainure de la cale lors du déplacement de la cale, la goupille étant maintenue dans la rainure jusque dans l'extrémité de butée de la rainure de la cale permettant le verrouillage de la fixation de la barre.

En particulier la forme évasée correspond à une forme d'un Vé dont l'angle d'ouverture (entre les branches) est étroit pour permettre de saisir l'axe de la goupille de verrouillage au-dessus de sa tête. La rainure a une largeur permettant de contenir verticalement l'axe de la goupille au-dessus de la tête de la goupille, tête qui est plus large que la rainure hormis dans la partie la plus évasée.

En particulier la cale a une forme allongée comportant une partie extrême reliée audit bras de pression.

Selon un mode de réalisation préféré, ledit relief de verrouillage /déverrouillage qui borde la rainure de la cale de verrouillage /déverrouillage se compose, suivant la direction longitudinale de la cale en allant de l'extrémité ouverte évasée de déverrouillage vers l'extrémité de butée de verrouillage de la rainure :
- d'une première partie en plan incliné permettant de saisir la goupille en position déverrouillée, puis
- d'une première portion en plan incliné et d'une deuxième portion en plan incliné, d'inclinaisons de sens différents, situées de part et d'autre d'une zone où la hauteur dudit relief est maximale (Hmax), puis
- d'une portion de sécurité en verrouillage ayant une hauteur strictement inférieure à la hauteur maximale (Hmax) dudit relief, en particulier cette portion est plate.

Selon ce mode de réalisation préféré, le bras de pression est un piston configuré pour trois positions principales de verrouillage/ déverrouillage de sorte que :
- en position de verrouillage lorsque la goupille est au niveau de la ligne où la hauteur dudit relief est maximale (Hmax), le bras de pression est aligné selon une ligne d'alignement correspondant à l'alignement des liaisons entre la poignée de manœuvre, le bras de pression et la cale de verrouillage/ déverrouillage,
- en position de sécurité en verrouillage, le bras de pression est en dessous de ladite ligne d'alignement,
- en position déverrouillée, le bras de pression est au-dessus de ladite ligne d'alignement.

De manière préférée, ledit organe élastique de compression est un ressort de compression enroulé autour de l'axe de la goupille et logé à l'intérieur de la barre. En particulier la goupille comprend une butée dudit ressort. Cette butée maintient ledit ressort en appui lorsque ledit ressort est comprimé. Plus particulièrement ladite butée est située en l'extrémité supérieure de l'axe de la goupille.

Avantageusement, ledit dispositif comprend un joint d'étanchéité disposé sous la paroi inférieure de la barre, entre ladite platine du support et ladite barre, de préférence entourant la tête de verrouillage de la goupille.

Selon un mode de réalisation particulier de l'invention, ledit organe élastique de compression est un tampon compressible, en particulier un joint compressible. Il est par exemple en une matière élastomère compressible de quelques millimètres, de 2 à 3 mm par exemple. En particulier, ledit tampon est un joint installé dans une gorge sous la face externe de la paroi inférieure de la barre, et sur un périmètre entourant au moins la tête de la goupille. Avantageusement, ledit joint compressible a aussi une fonction d'étanchéité.

De préférence, le corps du support est un corps au moins en partie creux, et ouvert en sa partie supérieure, ce qui permet notamment d'y contenir le bras de pression qui peut être amené à dépasser dudit corps en partie supérieure lorsque la poignée de manœuvre est relevée pour le déverrouillage. La poignée en position abaissée ferme la partie supérieure ouverte dudit corps.

Selon un mode préféré de réalisation de l'invention, ledit dispositif de barre de toit peut comprendre en outre un moyen anti-vol contre le vol de la barre de toit, et/ou de tout le dispositif, ledit moyen anti-vol comportant un système de verrouillage, par exemple un système à clé.

L'invention a également pour objet un porte-bagage de toit pour véhicule automobile comprenant au moins deux dispositifs de barre de toit et tels que celui décrit précédemment.

L'invention a également pour objet un procédé pour passer d'une d'installation latérale à une installation transversale d'un porte-bagage de toit installé sur un toit d'un véhicule automobile, dans lequel on utilise un porte-bagage de toit comprenant deux dispositifs de barre de toit et tels que celui décrit précédemment. Ledit procédé comprend les étapes :
- après avoir déverrouillé les moyens de fixation verrouillables/déverrouillables de chaque barre en relevant les poignées de manœuvre de chaque moyen de fixation des dispositifs de sorte que la cale de verrouillage/déverrouillage soit tirée par un bras de pression jusqu'à ce que la tête de la goupille soit positionnée dans la partie extrême ouverte évasée de la rainure de la cale, on démonte les barres qui étaient antérieurement fixées parallèles entre elles et en position latérale sur leurs supports de fixation respectifs, le support du premier moyen de fixation de chaque dispositif restant positionné en avant latéralement sur le toit et le support du deuxième moyen de fixation de chaque dispositif restant positionné en arrière latéralement sur le toit, puis
- on installe transversalement une barre pour fixation de l'une de ses extrémités au support de fixation avant qu'elle occupait antérieurement, dans une position tournée de 90 degrés par rapport à cette position antérieure, et pour fixation de son autre extrémité à l'autre support avant sur le côté de toit opposé et qui était antérieurement occupé par une extrémité de l'autre barre , en positionnant la tête de la goupille relative à chaque extrémité de barre au niveau de la partie extrême ouverte évasée de la rainure de la cale de verrouillage/déverrouillage pour chaque support considéré,
- on installe transversalement l'autre barre pour fixation de l'une de ses extrémités au support de fixation arrière qu'elle occupait antérieurement, dans une position tournée de 90 degrés par rapport à cette position antérieure, et pour fixation de son autre extrémité à l'autre support arrière sur le côté de toit opposé et qui était antérieurement occupé par une extrémité de l'autre barre, en positionnant la tête de la goupille relative à chaque extrémité de barre au niveau de la partie extrême ouverte évasée de la rainure de la cale de verrouillage/déverrouillage pour chaque support considéré ,
- on verrouille les moyens de fixation des barres en abaissant les poignées de manœuvre que comprend chaque moyen de fixation de chaque dispositif, de sorte que la cale de verrouillage/déverrouillage est poussée par le bras de pression et vient saisir la goupille au niveau de son axe au-dessus de la tête, dans la rainure de la cale, l'organe élastique de compression se comprime se comprime et contraint la goupille à suivre le relief de verrouillage/déverrouillage bordant la rainure jusqu'à la retenue de la goupille dans l'extrémité de butée de la rainure.

L'invention a également pour objet un procédé pour passer d'une installation transversale à une installation latérale d'un porte-bagage de toit sur un toit d'un véhicule automobile, dans lequel on utilise un porte-bagage de toit comprenant deux dispositifs de barre de toit et tels que celui décrit précédemment. Ledit procédé comprend les étapes:
- après avoir déverrouillé les moyens de fixation verrouillables/déverrouillables de chaque barre en relevant les poignées de manœuvre de chaque moyen de fixation des dispositifs de sorte que la cale de verrouillage/déverrouillage soit tirée par un bras de pression jusqu'à ce que la tête de la goupille soit positionnée dans la partie extrême ouverte évasée de la rainure de la cale, on démonte les barres qui étaient antérieurement fixées parallèles entre elles et en position transversale sur les supports de fixation respectifs, lesdits supports restant fixés sur le toit, puis
- on installe longitudinalement une barre pour fixation de l'une de ses extrémités au support de fixation avant qu'elle occupait antérieurement, dans une position tournée de 90 degrés par rapport à cette position antérieure, et pour fixation de son autre extrémité au support arrière sur le même côté de toit et qui était antérieurement occupé par une extrémité de l'autre barre, en positionnant la tête de la goupille relative à chaque extrémité de la barre au niveau de la partie extrême ouverte évasée de la rainure de la cale de verrouillage/déverrouillage pour chaque support considéré,
- on installe longitudinalement l'autre barre pour fixation de l'une de ses extrémités au support de fixation arrière qu'elle occupait antérieurement, dans une position tournée de 90 degrés par rapport à cette position antérieure, et pour fixation de son autre extrémité au support avant sur le même côté de toit et qui était antérieurement occupé par une extrémité de l'autre barre, en positionnant la tête de la goupille relative à chaque extrémité de barre au niveau de la partie extrême ouverte évasée de la rainure de la cale de verrouillage/déverrouillage pour chaque support considéré,
- on verrouille les moyens de fixation des barres en relevant les poignées de manœuvre que comprend chaque dispositif de sorte que la cale de verrouillage/déverrouillage est poussée par un bras de pression et vient saisir la goupille au niveau de son axe au-dessus de la tête, dans la rainure de la cale, l'organe élastique se comprime et contraint la goupille à suivre le relief de verrouillage/déverrouillage bordant la rainure jusqu'à la retenue de la goupille dans l'extrémité de butée de la rainure.

L'invention a également pour objet un véhicule automobile comprenant un porte-bagage de toit comportant au moins deux dispositifs de barre de toit tels que décrit précédemment.

D'autres particularités et avantages de l'invention ressortiront à la lecture de la description faite ci-après de plusieurs modes de réalisation particuliers de l'invention, donnés à titre indicatif mais non limitatifs, en référence aux dessins annexés sur lesquels :
[Fig. 1] illustre une vue partielle suivant une coupe longitudinale dans le plan vertical, d'un dispositif de barre de toit comportant une barre de toit (représentée partiellement) et un premier moyen de fixation de la barre en une extrémité de la barre, en position déverrouillée, selon un mode de réalisation de l'invention.
[Fig. 2] illustre suivant une vue de dessous, une partie du dispositif de barre de toit selon le mode de réalisation de l'invention illustré en Fig.1, en position déverrouillée.
[Fig. 3] illustre une vue partielle, suivant une coupe longitudinale dans le plan vertical, du dispositif de barre de toit de Fig.1, comportant une barre de toit (représentée partiellement) et le premier moyen de fixation de la barre en une extrémité de la barre, en position verrouillée.
[Fig. 4] illustre, suivant une vue de dessous, une partie du dispositif de barre de toit selon le mode de réalisation de l'invention illustré en Fig. 2, en position déverrouillée.
[Fig. 5] est une vue partielle suivant une coupe longitudinale dans le plan vertical, du dispositif de barre de toit (représenté partiellement aux figures précédentes), illustrant le deuxième moyen de fixation en l'autre extrémité de la barre, en position déverrouillée, selon l'invention.
[Fig. 6A] est une vue schématique, suivant une coupe longitudinale, du deuxième moyen de fixation du dispositif de fixation tel qu'illustré en Fig. 5, sans représentation de la barre et du support du dispositif, illustrant l'action des divers composants entre eux en position déverrouillée.
[Fig. 6B] est une vue schématique, suivant une coupe longitudinale, du deuxième moyen de fixation tel qu'illustré en Fig. 5, sans représentation de la barre et du support du dispositif, illustrant l'action des divers composants entre eux en position verrouillée en compression maximale.
[Fig. 6C] est une vue schématique, suivant une coupe longitudinale, du deuxième moyen de fixation tel qu'illustré en Fig. 5, sans représentation de la barre et du support du dispositif, illustrant l'action des divers composants entre eux en position verrouillée en compression relâchée (position de sécurité).
[Fig. 7] est une vue, suivant une coupe longitudinale dans le plan vertical, de la cale de verrouillage/déverrouillage d'un dispositif de barre de toit, pour illustrer la fonction d'un relief de verrouillage/déverrouillage de la cale pendant le verrouillage et le déverrouillage, et notamment pour les trois différentes positions illustrées par les figures 6A, 6B et 6C.
[Fig. 8] représente suivant une vue en perspective et de dessus, une paire de dispositifs de barre de toit dont les barres sont en position latérale (direction longitudinale) sur un toit de véhicule (non représenté).
[Fig. 9] représente suivant une vue en perspective et de dessus, la même paire de dispositifs de barre de toit qu'en Fig.8 mais les barres sont en position transversale sur un toit de véhicule (non représenté).
[Fig. 10] illustre une vue partielle, suivant une coupe longitudinale dans le plan vertical, d'un dispositif de barre de toit comportant une barre de toit (représentée partiellement) et l'un des moyens de fixation de la barre en une extrémité de la barre, pour une variante de l'organe de compression élastique selon l'invention.

Les orientations exprimées dans la description des figures sont données en référence à un repère orthonormé classique XYZ d'un véhicule automobile dans lequel X représente la direction longitudinale avant-arrière du véhicule, orientée vers l'arrière, Y la direction transversale du véhicule, orientée vers la droite, et Z la direction verticale orientée vers le haut du véhicule, les roues de ce dernier reposant sur le sol.

Sauf précisions contraires, dans la présente description, les termes avant, arrière, supérieur, inférieur, font ainsi référence aux directions du véhicule, lorsque le dispositif de barre de toit selon l'invention est monté sur le toit du véhicule.

Des références identiques pourront être utilisées d'une figure à l'autre pour désigner des éléments identiques ou similaires.

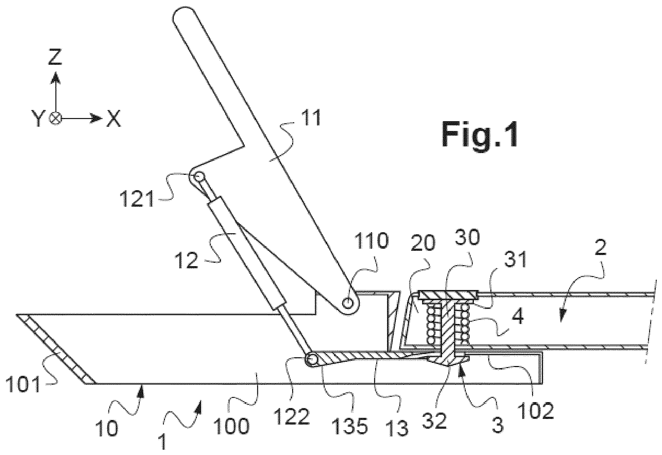

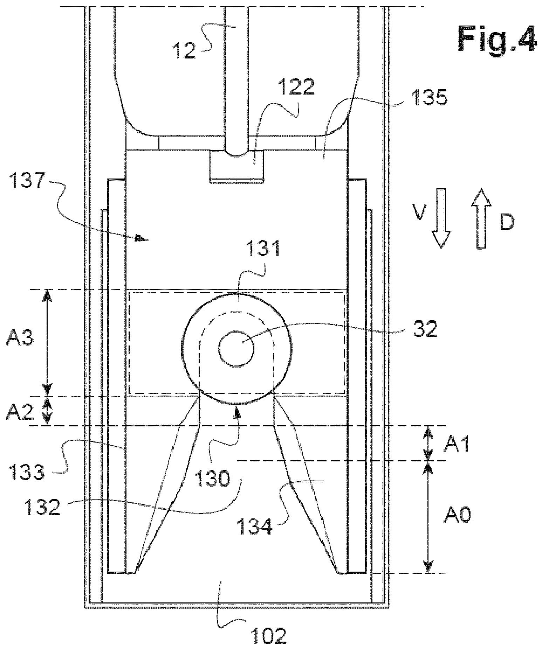

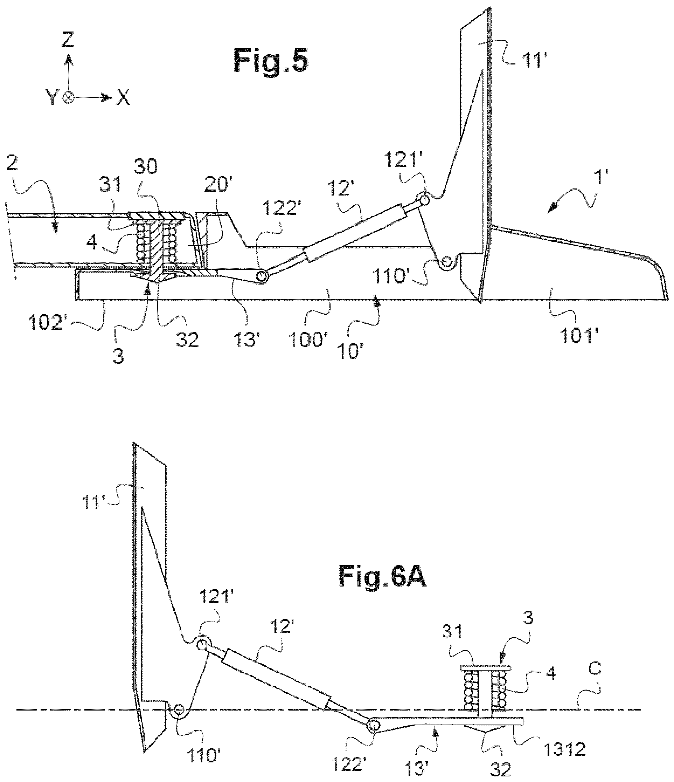

Le dispositif de barre de toit représenté sur les différentes figures 1 à 8 selon un mode de réalisation de l'invention comporte un premier moyen de fixation 1 en l'une des extrémités 20 d'une barre de toit 2 selon les figures 1 à 4, et un deuxième moyen de fixation 1' en l'autre extrémité 20' de la barre 2 selon la figure 5.

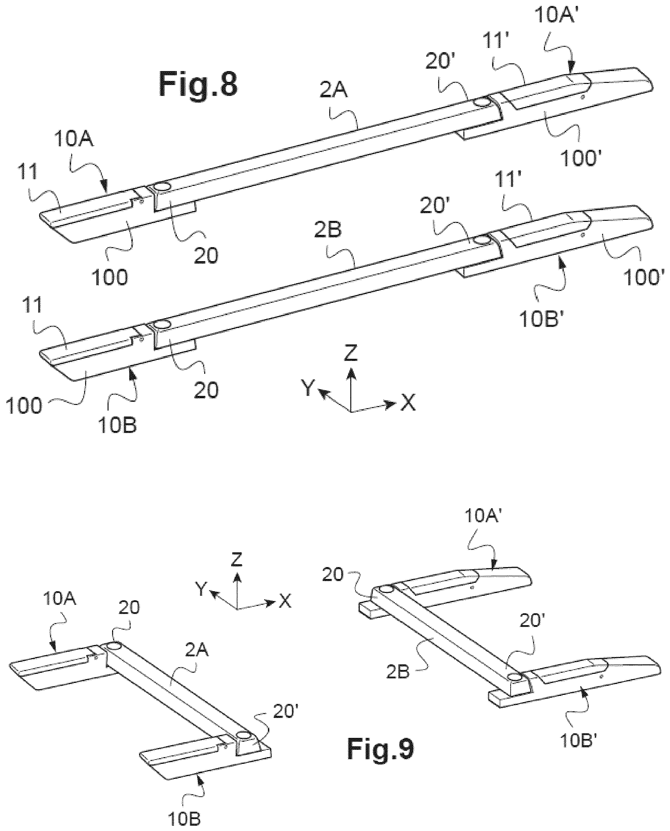

Selon cet exemple, le premier moyen de fixation 1 est défini en tant que moyen de fixation avant, et le deuxième moyen de fixation 1' est défini en tant que moyen de fixation arrière, comme illustré en Fig. 8 par la paire de dispositifs disposés latéralement, autrement dit longitudinalement (direction X), sur un toit de véhicule (non représenté).

Le premier moyen de fixation 1 verrouillable/déverrouillable comprend un support de fixation 10 comportant une poignée de manœuvre 11, un bras de pression 12, et une cale de verrouillage/déverrouillage 13.

Ce premier moyen de fixation 1 comprend aussi une goupille de verrouillage/déverrouillage 3, et un ressort de compression 4 comme organe élastique enroulé autour de l'axe 30 de la goupille. Ces derniers composants sont solidaires de la barre de toit 2, ils sont installés en l'extrémité 20 de la barre.

Le support de fixation 10 comprend un corps 100 qui s'étend longitudinalement (direction X) entre une extrémité distale 101 et une extrémité opposée proximale comprenant une platine 102, par rapport à l'extrémité considérée 20 de la barre 2. Ledit corps 10 est en partie creux, et ouvert en partie supérieure de manière à laisser passer le bras de pression lors des manœuvres de la poignée de manœuvre 11. L'extrémité proximale du support comprend une platine 102 réceptrice au moins en partie de la cale de verrouillage/déverrouillage 13, et au niveau de l'extrémité 20 de la barre, notamment de la goupille de verrouillage/déverrouillage 3.

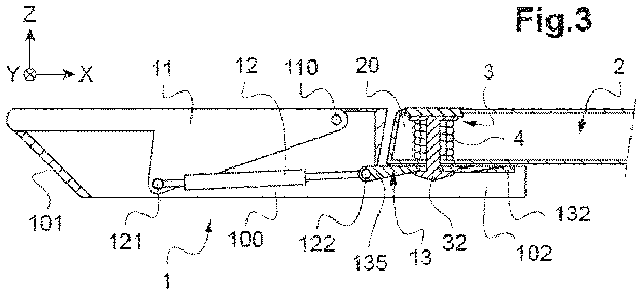

La poignée de manœuvre 11 est supportée par le corps 100 dudit support, et vient fermer en position de verrouillage l'ouverture en partie supérieure dudit corps. Pour ce premier moyen de fixation 1, la poignée 11 est montée mobile en rotation, autour d'un axe 110 perpendiculaire (direction transversale Y) au corps du support et situé en une extrémité dudit corps proximale de la platine 102, entre une position abaissée de verrouillage (Fig. 1) et une position relevée de déverrouillage (Fig. 3).

Le bras de pression 12 est logé dans le corps 10 dudit support. Il est relié en l'une de ses extrémités à la poignée de manœuvre 11 selon un axe de liaison 121 perpendiculaire au corps du support, et en son extrémité opposée il est relié à une extrémité 135 de la cale de verrouillage/déverrouillage 13 selon un autre axe de liaison 122 perpendiculaire au corps du support. Ce bras 12 est donc mobile solidairement à la poignée de manœuvre 11, et mobile en rotation par rapport à la cale 13 autour dudit autre axe de liaison 122.

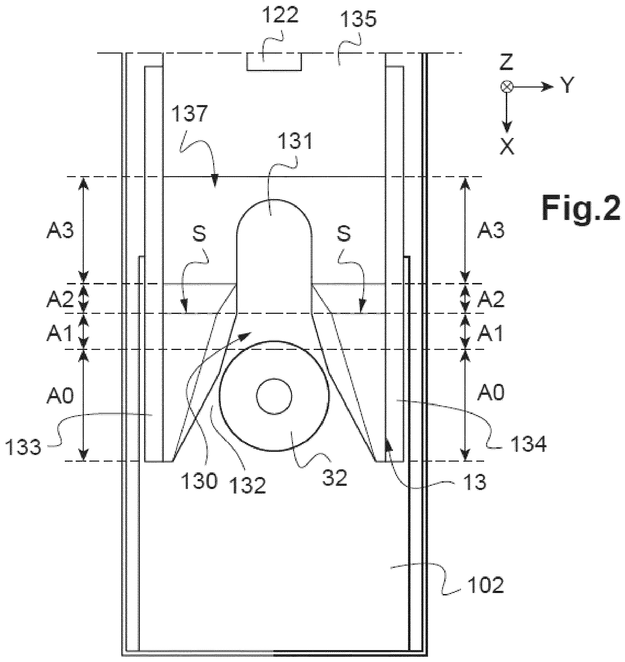

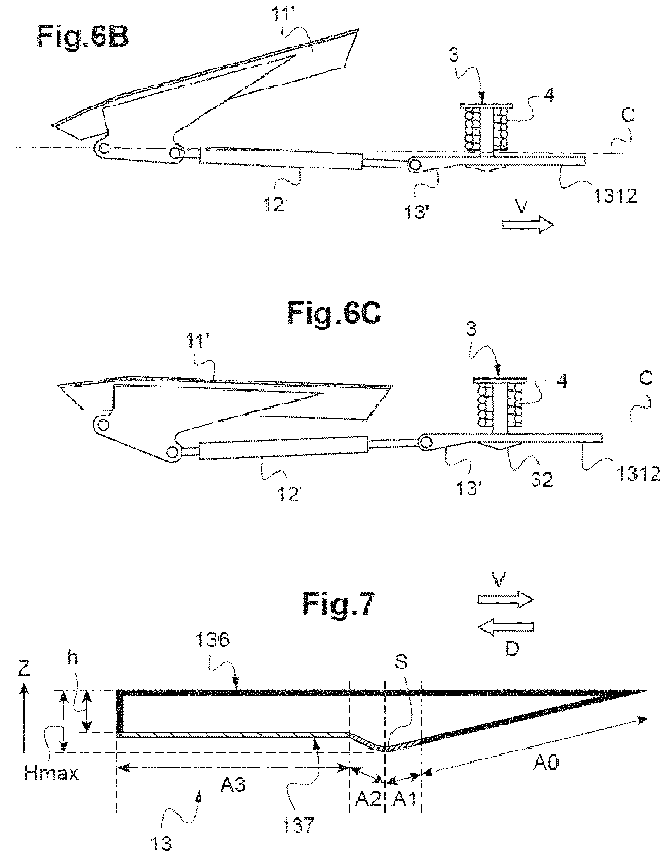

En référence aux figures 2, 4 et 7, la cale de verrouillage/déverrouillage 13 a une forme allongée, et elle s'étend entre une partie extrême 135 reliée audit bras de pression et une partie extrême opposée de verrouillage/déverrouillage qui s'étend au moins partiellement en surface de la platine 102 du support 10. Cette partie extrême de verrouillage/déverrouillage comprend une rainure traversante longitudinale 130 s'étendant entre une extrémité de butée de verrouillage 131 ayant une largeur donnée et une extrémité ouverte évasée de déverrouillage 13. La cale comprenant une face inférieure 137 comportant un relief de verrouillage/déverrouillage (Fig. 7) bordant ladite rainure. Ce relief comporte deux rampes latérales 133, 134 (une rampe par côté de la rainure). Ces deux rampes forment les deux branches d'un Vé distantes dans la partie la plus évasée d'une distance (direction Y) strictement supérieure à la largeur de l'extrémité de butée 131 de la rainure.

Le fonctionnement de la cale de verrouillage/déverrouillage sera détaillé un plus loin lors de la description du fonctionnement de l'ensemble du dispositif.

La goupille de verrouillage/déverrouillage 3 est située en l'extrémité considérée 20 de la barre. Elle comporte un axe 30 de direction verticale (Z), muni en son extrémité inférieure d'une tête de verrouillage 32, plus large que les dimensions transverses du diamètre, dudit axe 30. Ledit axe 30 s'étend verticalement dans la barre selon une direction perpendiculaire à la direction longitudinale de la barre et passe à travers un orifice traversant dans la paroi inférieure de la barre de sorte que la tête 32 de la goupille est hors de la barre. Plus particulièrement selon l'exemple, la tête 32 a une forme circulaire et l'axe est de forme cylindrique 30 dont le diamètre est strictement inférieur au diamètre de la tête. Cet orifice dans la paroi inférieure de la barre débouche au-dessus de la platine 102 du support de fixation 10.

Ledit axe 30 de direction verticale (Z) est muni en son extrémité supérieure d'une butée 31 qui maintient la goupille dans la barre, et contre laquelle le ressort de compression 4 enroulé autour dudit axe 30 peut venir en appui pour être comprimé dans la barre. La goupille 3 peut se déplacer suivant son axe 30, de haut en bas, en comprimant le ressort 4 lors d'une manœuvre de verrouillage/déverrouillage.

Le deuxième moyen de fixation 1' verrouillable/déverrouillable comprend, similairement au premier moyen de fixation 1, un support de fixation 10' qui comporte une poignée de manœuvre 11', un bras de pression 12', et une cale de verrouillage/déverrouillage 13'.

Le support 10' comprend un corps 100' s'étendant longitudinalement entre une extrémité distale 101' et une extrémité opposée proximale par rapport à l'extrémité considérée 20' de la barre 2. Cette extrémité proximale comprend une platine 102' réceptrice au moins en partie de la cale de verrouillage/déverrouillage 13'.

Ce deuxième moyen de fixation 1' comprend aussi une goupille de verrouillage/déverrouillage 3 et un ressort de compression 4 comme organe de compression élastique solidaires de la barre de toit 2, installés en l'autre extrémité 20' de la barre, et identiques à ceux du premier moyen installés en l'extrémité 20 de la barre 2.

Les composants du deuxième moyen de fixation 1' sont agencés entre eux similairement à ceux du premier moyen de fixation 1: le bras de pression 12' logé dans le corps 10' du support de fixation 1' est relié en l'une de ses extrémités à la poignée 11' selon un axe de liaison 121' perpendiculaire au corps du support, et en son extrémité opposée il est relié à une extrémité de la cale de verrouillage/déverrouillage 13' selon un autre axe de liaison 122' perpendiculaire au corps du support.

La différence avec le premier moyen de fixation réside dans le fait que la poignée de manœuvre 11' du deuxième moyen de fixation 1' est montée mobile en rotation autour d'un axe 110' perpendiculaire au corps du support 10' et qui est situé en une extrémité dudit corps distale de la platine 102', entre une position abaissée de verrouillage et une position relevée de déverrouillage (Fig. 5).

Ladite cale 13, 13' est mobile en translation longitudinale solidairement audit bras de pression, elle peut se déplacer d'avant en arrière (et inversement), guidée entre des bords longitudinaux du corps du support.

Les deux moyens de fixation 1, 1' fonctionnent de manière similaire, et leur fonctionnement va être expliqué ensemble, en référence aux figures 1 à 7.

Les figures 6A, 6B, 6C illustrent schématiquement, suivant une coupe longitudinale partielle, le deuxième moyen de fixation 1' illustré en Figure 5, sans représentation de la barre elle-même ni du corps du support du dispositif, pour montrer les liaisons des composants de verrouillage/déverrouillage entre eux, et notamment la position du bras de pression 12' selon les trois positions principales du mécanisme : une position de déverrouillage (Fig. 6A), et deux positions de verrouillage (Fig. 6B, Fig. 6C) dont une position de sécurité (Fig. 6C).

Ces trois positions peuvent similairement s'appliquer au premier moyen de fixation 1, les deux moyens de fixation 1, 1' utilisant une cale 13, 13' ayant une face inférieure comportant un même relief de verrouillage/déverrouillage bordant la rainure de la cale, tel que celui illustré par la vue en coupe longitudinale, dans le plan XZ, représentée sur Fig. 7.

Ladite cale comporte une face supérieure 136, plane, proximale de la face extérieure de la paroi inférieure de la barre à travers laquelle passe la goupille. La face inférieure 137 de la cale, opposée à ladite face supérieure, présente un relief (Fig. 7) qui permet le verrouillage /déverrouillage. Ledit relief comporte selon la direction longitudinale en allant de l'extrémité évasée de déverrouillage 132 vers l'extrémité de butée de verrouillage 131 de la rainure 130 :
- une première partie A0 en plan incliné dans laquelle la tête 32 de la goupille 3 est en position déverrouillée, puis
- une première portion en plan incliné A1 et une deuxième portion en plan incliné A2, d'inclinaisons de sens différents, autrement dit l'une est descendante et l'autre montante en fonction du sens du verrouillage ou du sens de déverrouillage, situées de part et d'autre d'une zone S où la hauteur dudit relief bordant la rainure de la cale est maximale (Hmax), puis
- une portion de sécurité en verrouillage A3 retenant la goupille 3, de hauteur « h » strictement inférieure à ladite hauteur maximale Hmax, cette portion étant plate.

La rainure 130 a, au niveau des portions en plan incliné A1 et A2 d'inclinaisons de sens différents et de la portion de sécurité A3, une largeur strictement inférieure aux dimensions transverses de la tête de la goupille et strictement supérieure au diamètre de l'axe de la goupille, de sorte que la goupille peut y être guidée par son axe dans la rainure, sa tête étant en contact de la face inférieure 137 de la cale et suit le relief de verrouillage/déverrouillage, le ressort 4 se comprimant.

La première portion en plan incliné A1 et la deuxième portion en plan incliné A2 sont verrouillantes, elles permettent de tirer la goupille vers le bas en comprimant l'organe élastique.

En déverrouillage (Fig. 1, Fig. 2, Fig. 5), comme c'est le cas lors de l'installation de la barre sur le support, la tête de la goupille 32 portée par et hors l'extrémité de la barre est positionnée au niveau de la partie évasée 132 de la rainure 130 de la cale, et plus précisément en extrémité de cette partie évasée où l'espace entre les branches du Vé (Fig. 2) est suffisamment large pour accueillir ladite tête. La poignée de manœuvre 11, 11' est relevée.

Lorsque le dispositif passe de la position de déverrouillage (Fig. 1, Fig. 2, Fig. 5) vers une position de verrouillage (Fig. 3, Fig. 4, Fig. 6B, Fig. 6C), on rabat la poignée de manœuvre 11, 11' par rotation autour de l'axe 110, 110'. Le bras de pression 12, 12' se comprime suite au mouvement de la poignée 11, 11', pousse la cale 13, 13' en translation qui avance sur la platine 102, 102' , sous et vers la barre selon ce sens du verrouillage (flèche V en Fig. 7), de sorte que la goupille 3 est saisie au niveau de son axe 30, par la cale, de la partie évasée de la rainure vers les portions verrouillantes A1, A2 (Fig. 6B) plus étroites jusqu'à la portion de sécurité A3 (Fig. 6C) en l'extrémité de butée de la rainure. Les rampes en plan incliné 1331, 1341 de la première partie A0, plan qui est descendant dans ce sens de verrouillage (flèche V en Fig. 7), grâce à la forme en Vé avec un angle relativement étroit, saisissent la goupille 3 au niveau de l'extrémité de l'axe 30 porteur de la tête, et la tirent vers le bas au fur et à mesure de l'avancement de la position de la goupille dans les portions verrouillantes A1, A2, en comprimant le ressort 4. Après la première portion verrouillante A1 de la cale, la compression du ressort 4 est maximale au niveau de la zone S de hauteur maximale « Hmax» dudit relief de la cale. La goupille, une fois passé la zone S de hauteur maximale « Hmax», passe dans la deuxième portion inclinée verrouillante A2, ascendante dans ce sens de verrouillage, ce qui permet de relâcher très légèrement le ressort 4, jusqu'à atteindre la portion verrouillante plate A3 (Fig. 6C), d'une hauteur « h » inférieure à la hauteur maximale « Hmax » dudit relief bordant la rainure de la cale, pour rester maintenue dans l'extrémité de butée 131 de la rainure. Le ressort 4 reste donc comprimé mais est alors légèrement moins comprimé qu'au niveau de la zone S de hauteur maximale Hmax. Le fait que la position finale de verrouillage soit positionnée à l'arrière de la zone S de hauteur maximale, évite un déverrouillage intempestif, la poignée ne pouvant être relevée sans un effort pour passer cette zone S où le ressort de compression est le plus fortement comprimé. C'est pourquoi cette position de verrouillage est une position de sécurité en verrouillage (Fig. 6C).

Le bras de pression 12, 12' est en effet un piston conçu pour les trois positions principales du mécanisme de verrouillage/ déverrouillage, et permettre par exemple une compression de 2 à 3 millimètres. En position déverrouillée (Fig. 6A), lorsque l'utilisateur peut monter ou démonter les barres de toit, il n'y a pas de compression du ressort, le bras de pression 12' est au-dessus d'une ligne d'alignement C correspondant à l'alignement du mécanisme c'est-à-dire des liaisons 110', 121', 122' entre la poignée, le bras de pression et la cale, En position verrouillée en compression maximale, sur la zone S de hauteur maximale Hmax dudit relief, lorsque toutes les articulations du mécanisme sont sur la même ligne d'alignement C (Fig. 6B), le bras de pression 12' est donc aligné sur cette ligne C En position verrouillée de sécurité, plus relâchée que la précédente, le bras de pression est en dessous de la ligne du mécanisme C (Fig. 6C). Le but de ce bras de pression est d'appliquer une force vers le bas sur la poignée de manœuvre et d'empêcher tout déverrouillage indésirable du mécanisme.

Ledit dispositif comprend en outre un joint sous la face inférieure de la paroi inférieure de la barre, par exemple installé dans une gorge creusée dans la face extérieure de la paroi inférieure de la barre, autour de la tête de la goupille, et entre cette paroi et la cale 13, ce joint amortit le contact entre la barre et le support, et a une fonction d'étanchéité à la poussière et à l'eau.

Lorsqu'on veut enlever la barre 2, le déverrouillage s'effectue quand un opérateur actionne la poignée de manœuvre 11, 11' en relevant la poignée, la cale 13, 13' est ramenée vers le corps du support, en suivant le sens de déverrouillage (flèche D en Fig. 7), qui est inverse longitudinalement à celui effectué lors du verrouillage. Dans un premier temps, un effort est nécessaire pour passer la zone S de hauteur maximale, puis au-delà en allant vers l'extrémité évasée de la rainure 130, le ressort de compression 4 se relâche, la goupille 3 revient en position déverrouillée, la tête de la goupille étant dans la partie la plus évasée de la rainure.

On peut ainsi installer une paire de barres de toit en position latérale, autrement dit selon la direction longitudinale X, sur le toit d'un véhicule automobile, en installant deux dispositifs de barre de toit, tels que celui décrit précédemment, parallèlement et symétriquement en miroir l'un de l'autre. En référence à la figure 8, les lettres A et B sont ajoutées aux signes de référence des barres et des supports de fixation pour distinguer les deux dispositifs de barre de toit qui sont identiques. Le support avant 10A, 10B avec ses composants 100, 11, 12, 13 et le support arrière 10A', 10B' avec ses composants 100', 11', 12', 13', respectifs des dispositifs, sont installés selon la direction longitudinale du véhicule. Les corps 100, 100' des supports avant 10A, 10B et arrière 10A', 10B' d'un même dispositif sont installés éloignés l'un de l'autre à la distance requise pour installer la barre correspondante 2A, 2B entre eux. Les barres 2A et 2B sont identiques, et sont conformes à la description de la barre 2 décrite plus haut.

Pour passer les barres 2A, 2B qui sont en position latérale à une position transversale, selon la direction transversale Y du véhicule, en référence à la figure 9, les supports 10A, 10B, 10A', 10B' avec leurs composants respectifs 100, 11, 12, 13, et 100', 11', 12',13' et respectivement auxdits dispositifs, restent en place, il suffit de déverrouiller chacune des barres 2A, 2B comme expliqué plus haut en relevant les poignées de manœuvre 11, 11' de chaque moyen de fixation des dispositifs de sorte que la cale de verrouillage/déverrouillage 13, 13' est tirée par le bras de pression 12, 12' jusqu'à ce que la tête 32 de la goupille soit positionnée dans la partie extrême ouverte évasée 132 de la rainure de la cale.

On démonte ensuite chaque barre 2A, 2B et on les fixe en leurs extrémités 20, 20' respectives en les installant à 90 degrés par rapport aux corps des supports, pour l'une des barres 2A entre les deux supports avant 10A, 10B, et pour l'autre des barres 2B entre les deux supports arrière 10A', 10B', en positionnant la tête de la goupille relative à chaque extrémité de barre au niveau de la partie extrême ouverte évasée de la rainure de la cale de verrouillage/déverrouillage solidaire du support considéré. On verrouille les fixations en chaque extrémité des barres comme décrit plus haut, en abaissant les poignées de manœuvre (11, 11') que comprend chaque moyen de fixation de chaque dispositif, de sorte que la cale de verrouillage/déverrouillage 13, 13' est poussée par le bras de pression 12, 12' et vient saisir la goupille au niveau de son axe au-dessus de la tête, dans la rainure de la cale, le ressort se comprime et permet le maintien de la tête de la goupille sous et contre relief de verrouillage/déverrouillage bordant ladite rainure jusqu'à la retenue de la goupille dans l'extrémité de butée 131 de la rainure.

Le cas échéant les barres peuvent être télescopiques pour ajuster leur longueur aux dimensions du toit.

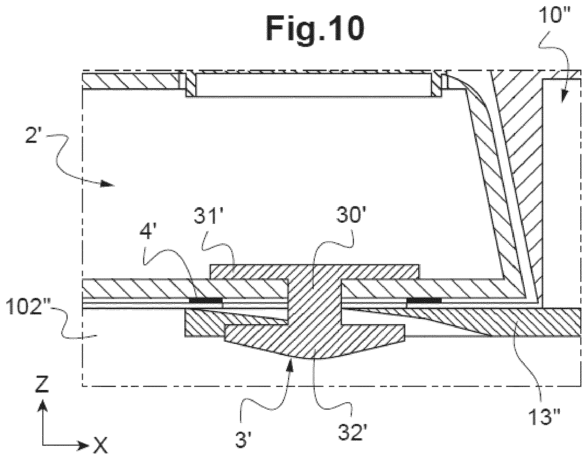

Selon une variante de l'invention illustré par la figure 10, le ressort de compression 4 peut être remplacé par un tampon élastique 4', par exemple sous forme d'un joint suffisamment épais pour se comprimer par exemple de 2 à 3 millimètres en verrouillage. Ce joint élastique 4' est installé dans une gorge creusée dans la face extérieure de la paroi inférieure de la barre, autour de la tête 32' de la goupille 3', entre cette paroi et la cale 13". La goupille 3' est installée dans l'extrémité de la barre 2' du dispositif de barre de toit. L'axe de direction verticale 30' de la goupille passe à travers un orifice traversant dans la paroi inférieure de la barre, et il porte une butée supérieure 31' située dans la barre, au-dessus de cette paroi inférieure de la barre. Ledit axe 30' de la goupille porte en son autre extrémité la tête de verrouillage 32' de la goupille hors de la barre, qui vient au niveau de la cale 13". Le fonctionnement du dispositif est similaire aux dispositifs avec ressort 4 précédemment décrits, la cale 13" ayant la même configuration que les cales 13, 13' déjà décrites, la goupille 3' pouvant se déplacer de haut en bas.

Dans ce mode de réalisation, le tampon élastique peut jouer aussi le rôle de joint d'étanchéité à l'eau et à la poussière.

Le dispositif de barre de toit selon l'invention permet d'assurer un mode de fixation longitudinale ainsi qu'un mode de fixation transversale de barres de toit d'un porte-bagage de toit, facilement et sans avoir à utiliser d'outil pour passer d'un mode de fixation à l'autre des barres, une fois les supports des dispositifs installés sur le toit. Par ailleurs, le dispositif de barre de toit peut être équipé en outre d'un système anti-vol non représenté. Le mécanisme peut par exemple être un mécanisme de fermeture à clé.

## Revendications

1. Dispositif de barre de toit comprenant une barre de toit (2, 2') démontable et un premier moyen de fixation verrouillable/déverrouillable (1) de l'une des extrémités de la barre et un deuxième moyen de fixation verrouillable/déverrouillable (1') de l'autre extrémité de la barre, **caractérisé en ce que** :
i) chaque moyen de fixation verrouillable/déverrouillable comprend :
- un support de fixation (10, 10', 10") comprenant :
a) un corps (10, 10', 10") s'étendant longitudinalement entre une extrémité distale (101, 101') et une extrémité opposée proximale d'une extrémité (20, 20') de la barre (2, 2'), ladite extrémité proximale comportant une platine (102, 102', 102") réceptrice d'une extrémité de la barre, et
b) une poignée de manœuvre (11, 11') supportée par le corps (100, 100',) dudit support (10, 10', 10"), montée mobile en rotation autour d'un axe perpendiculaire (110, 110') au corps du support entre une position abaissée de verrouillage et une position relevée de déverrouillage, et
c) un bras de pression (12, 12') logé dans le corps dudit support et mobile solidairement à la poignée de manœuvre, et
d) une cale de verrouillage/déverrouillage (13,13') mobile en translation longitudinale solidairement audit bras de pression(12, 12'), comportant une partie apte à s'étendre au moins partiellement en surface de ladite platine et qui comprend une rainure traversante (130), ladite rainure s'étendant longitudinalement entre une extrémité de butée (131) et une extrémité ouverte évasée (132), et la cale comprenant une face inférieure (137) comportant un relief de verrouillage/déverrouillage (A0, A1, A2, A3, 133, 134) bordant ladite rainure,
- une goupille de verrouillage/déverrouillage (3, 3'), située en l'une des extrémités de la barre, comportant un axe (30, 30') muni en son extrémité inférieure d'une tête (32, 32') ayant une largeur strictement supérieure aux dimensions transverses dudit axe, ledit axe s'étendant verticalement dans la barre selon une direction perpendiculaire à la direction longitudinale de la barre, et passant à travers un orifice traversant débouchant au-dessus de la platine (102, 102', 102") du support de fixation, de sorte que la tête (32, 32') de la goupille est hors de la barre et est apte à se positionner au niveau de la rainure (130) de la cale de verrouillage/déverrouillage (13,13') pour coopérer avec ledit relief de verrouillage/déverrouillage et occuper une position de verrouillage au niveau de l'extrémité de butée (131) de la rainure de la cale ou une position de déverrouillage dans l'extrémité ouverte évasée (132) de ladite rainure,
- un organe élastique de compression (4, 4') permettant à la goupille de verrouillage/déverrouillage un mouvement de translation verticale selon une direction perpendiculaire à la direction longitudinale de ladite cale,
ii) l'axe perpendiculaire (110, 110') au corps du support de rotation, par rapport auquel la poignée de manœuvre (11, 11') respective du support (10, 10', 10") d'un moyen de fixation est mobile entre une position abaissée de verrouillage et une position relevée de déverrouillage, est proximal de la platine (102) du support pour la poignée (11) du premier moyen de fixation, et est proximal de l'extrémité distale (101') du corps du support pour la poignée (11') du deuxième moyen de fixation.

2. Dispositif de barre de toit selon la revendication 1, **caractérisé en ce que** ledit relief de verrouillage /déverrouillage qui borde la rainure (130) de la cale de verrouillage /déverrouillage (13,13') se compose suivant la direction longitudinale de la cale en allant de l'extrémité ouverte évasée (132) de déverrouillage vers l'extrémité de butée (131) de verrouillage de la rainure (130) :
- d'une première partie (A0) en plan incliné permettant de saisir la goupille (3) en position déverrouillée, puis
- d'une première portion en plan incliné (A1) et d'une deuxième portion en plan incliné (A2), d'inclinaisons de sens différents, situées de part et d'autre d'une zone (S) où la hauteur dudit relief est maximale (Hmax), puis
- d'une portion de sécurité en verrouillage (A3) ayant une hauteur (h) strictement inférieure à la hauteur maximale (Hmax) dudit relief.

3. Dispositif de barre de toit selon la revendication 2, **caractérisé en ce que** le bras de pression (12, 12') est un piston configuré pour trois positions principales de verrouillage/ déverrouillage de sorte que :
- en position de verrouillage lorsque la goupille (3,3 ') est au niveau de la zone (S) où la hauteur du relief de verrouillage /déverrouillage qui borde la rainure est maximale (Hmax), le bras de pression est aligné suivant une ligne d'alignement ( C ) correspondant à l'alignement des liaisons (110, 121, 122, 110', 121', 122') entre la poignée de manœuvre (11, 11'), le bras de pression (12, 12') et la cale de verrouillage/ déverrouillage (13,13'),
- en position de sécurité en verrouillage, le bras de pression est en dessous de ladite ligne d'alignement ( C ),
- en position déverrouillée, le bras de pression est au-dessus de ladite ligne d'alignement ( C ).

4. Dispositif de barre de toit selon l'une quelconque des revendications 1 à 3, **caractérisé en ce que** ledit organe élastique (4) est un ressort de compression enroulé autour de l'axe (30) de la goupille (3) et est logé à l'intérieur de la barre (2).

5. Dispositif de barre de toit selon la revendication 4, **caractérisé en ce que** la goupille (3) comprend une butée (31) dudit ressort (4).

6. Dispositif de barre de toit selon l'une quelconque des revendications 1 à 3, **caractérisé en ce que** ledit organe élastique de compression est un tampon compressible (4').

7. Dispositif de barre de toit selon la revendication 6, **caractérisé en ce que** ledit tampon compressible (4') est un joint compressible installé dans une gorge sous la face externe de la paroi inférieure de la barre (2'), et sur un périmètre entourant au moins la tête (32') de la goupille (3').

8. Porte-bagage de toit pour véhicule automobile, **caractérisé en ce qu'**il comprend au moins deux dispositifs de barre de toit selon l'une quelconque des revendications 1 à 7.

9. Procédé pour passer d'une installation latérale à une installation transversale d'un porte-bagage de toit installé sur un toit d'un véhicule automobile, **caractérisé en ce qu'**on utilise un porte-bagage de toit comprenant deux dispositifs de barre de toit selon l'une quelconque des revendications 1 à 7, et **en ce que** ledit procédé comprend les étapes suivantes :
- après avoir déverrouillé les moyens de fixation verrouillables/déverrouillables de chaque barre (2A, 2B) en relevant les poignées de manœuvre (11, 11') de chaque moyen de fixation des dispositifs de sorte que la cale de verrouillage/déverrouillage (13,13') soit tirée par un bras de pression (12, 12') jusqu'à ce que la tête (32, 32') de la goupille (3, 3') soit positionnée dans la partie extrême ouverte évasée (132) de la rainure (130) de la cale (13, 13', 13"), on démonte les barres (2A, 2B) qui étaient antérieurement fixées parallèles entre elles et en position latérale sur leurs supports de fixation (10A, 10A', 10B, 10B') respectifs, le support (10A, 10B) du premier moyen de fixation de chaque dispositif restant positionné en avant latéralement sur le toit et le support (10A', 10B') du deuxième moyen de fixation de chaque dispositif restant positionné en arrière latéralement sur le toit, puis
- on installe transversalement une barre (2A) pour fixation de l'une de ses extrémités (20) au support de fixation avant (10A) qu'elle occupait antérieurement, dans une position tournée de 90 degrés par rapport à cette position antérieure, et pour fixation de son autre extrémité (20') à l'autre support avant (10B) sur le côté de toit opposé et qui était antérieurement occupé par une extrémité de l'autre barre (2B), en positionnant la tête (32, 32') de la goupille relative à chaque extrémité de barre au niveau de la partie extrême ouverte évasée (132) de la rainure (130) de la cale de verrouillage/déverrouillage pour chaque support (10A, 10B) considéré,
- on installe transversalement l'autre barre (2B) pour fixation de l'une de ses extrémités (20') au support de fixation arrière (10B') qu'elle occupait antérieurement, dans une position tournée de 90 degrés par rapport à cette position antérieure, et pour fixation de son autre extrémité (20) à l'autre support arrière (10A') sur le côté de toit opposé et qui était antérieurement occupé par une extrémité de l'autre barre (2A), en positionnant la tête (32, 32') de la goupille relative à chaque extrémité de barre au niveau de la partie extrême ouverte évasée (132) de la rainure (130) de la cale de verrouillage/déverrouillage pour chaque support considéré (10A', 10B'),
- on verrouille les moyens de fixation des barres (2A, 2B) en abaissant les poignées de manœuvre (11, 11') que comprend chaque moyen de fixation de chaque dispositif, de sorte que la cale de verrouillage/déverrouillage (13,13') est poussée par le bras de pression (12, 12') et vient saisir la goupille au niveau de son axe (30, 30') au-dessus de la tête (32, 32'), dans la rainure (130) de la cale, l'organe élastique de compression (4, 4') se comprime et contraint la goupille à suivre le relief de verrouillage/déverrouillage bordant la rainure (130) jusqu'à la retenue de la goupille dans l'extrémité de butée (131) de la rainure (130).

10. Procédé pour passer d'une installation transversale à une installation latérale d'un porte-bagage de toit installé sur un toit d'un véhicule automobile, **caractérisé en ce qu'**on utilise un porte-bagage de toit comprenant deux dispositifs de barre de toit selon l'une quelconque des revendications 1 à 7, et **en ce que** ledit procédé comprend les étapes suivantes :
- après avoir déverrouillé les moyens de fixation verrouillables/déverrouillables de chaque barre (2A, 2B) en relevant les poignées de manœuvre (11, 11') de chaque moyen de fixation des dispositifs de sorte que la cale de verrouillage/déverrouillage (3, 3') soit tirée par un bras de pression (12, 12') jusqu'à ce que la tête (32, 32') de la goupille (3, 3') soit positionnée dans la partie extrême ouverte évasée (132) de la rainure (130) de la cale, on démonte les barres (2A, 2B) qui étaient antérieurement fixées parallèles entre elles et en position transversale sur les supports de fixation (10A, 10B, 10A', 10B') respectifs, lesdits supports restant fixés sur le toit, puis
- on installe longitudinalement une barre (2A) pour fixation de l'une de ses extrémités au support de fixation avant (10A) qu'elle occupait antérieurement, dans une position tournée de 90 degrés par rapport à cette position antérieure, et pour fixation de son autre extrémité au support arrière (10A') sur le même côté de toit et qui était antérieurement occupé par une extrémité de l'autre barre (2B), en positionnant la tête (32, 32') de la goupille relative à chaque extrémité de la barre (2A) au niveau de la partie extrême ouverte évasée (132) de la rainure (130) de la cale de verrouillage/déverrouillage pour chaque support considéré (10A, 10A'),
- on installe longitudinalement l'autre barre (2B) pour fixation de l'une de ses extrémités au support de fixation arrière (10B') qu'elle occupait antérieurement, dans une position tournée de 90 degrés par rapport à cette position antérieure, et pour fixation de son autre extrémité au support avant (10B) sur le même côté de toit et qui était antérieurement occupé par une extrémité de l'autre barre (2A), en positionnant la tête (32, 32') de la goupille relative à chaque extrémité de barre au niveau de la partie extrême ouverte évasée (132) de la rainure de la cale de verrouillage/déverrouillage pour chaque support considéré (10B, 10B'),
- on verrouille les moyens de fixation des barres (2A, 2B) en relevant les poignées de manœuvre (11, 11') que comprend chaque dispositif de sorte que la cale de verrouillage/déverrouillage est poussée par un bras de pression (12, 12') et vient saisir la goupille (3, 3') au niveau de son axe (30, 30') au-dessus de la tête (32, 32'), dans la rainure (130) de la cale, l'organe élastique (4, 4') se comprime et contraint la goupille à suivre le relief de verrouillage/déverrouillage bordant la rainure (130) jusqu'à la retenue de la goupille dans l'extrémité de butée (131) de la rainure.

## Patentansprüche

1. Dachrelingvorrichtung, welche eine lösbare Dachreling (2, 2') und ein erstes verriegelbares/entriegelbares Befestigungsmittel (1) eines der Enden der Reling und ein zweites verriegelbares/entriegelbares Befestigungsmittel (1') des anderen Endes der Reling umfasst, **dadurch gekennzeichnet, dass**:
i) jedes verriegelbare/entriegelbare Befestigungsmittel umfasst:
- einen Befestigungsträger (10, 10', 10"), welcher umfasst:
a) einen Körper (10, 10', 10"), der sich längs zwischen einem distalen Ende (101, 101') und einem entgegengesetzten proximalen Ende eines Endes (20, 20') der Reling (2, 2') erstreckt, wobei das proximale Ende eine Platte (102, 102', 102") zur Aufnahme eines Endes der Reling aufweist, und
b) einen von dem Körper (100, 100') des Trägers (10, 10', 10") getragenen Betätigungsgriff (11, 11'), der drehbeweglich zwischen einer abgesenkten Verriegelungsposition und einer angehobenen Entriegelungsposition um eine zum Körper des Trägers senkrechte Achse (110, 110') gelagert ist, und
c) einen Druckarm (12, 12'), der im Körper des Trägers aufgenommen ist und zusammen mit dem Betätigungsgriff beweglich ist, und
d) einen Verriegelungs-/Entriegelungsklotz (13, 13'), der zusammen mit dem Druckarm (12, 12') in Längstranslation beweglich ist, der einen Teil aufweist, der sich wenigstens teilweise an der Oberfläche der Platte erstrecken kann, und der eine Quernut (130) umfasst, wobei sich diese Nut längs zwischen einem Anlageende (131) und einem erweiterten offenen Ende (132) erstreckt, und wobei der Klotz eine Unterseite (137) umfasst, die ein Verriegelungs-/Entriegelungsrelief (A0, A1, A2, A3, 133, 134) aufweist, das die Nut umrandet,
- einen an einem der Enden der Reling befindlichen Verriegelungs-/Entriegelungsbolzen (3, 3'), der eine Achse (30, 30') aufweist, die an ihrem unteren Ende einen Kopf (32, 32') mit einer Breite aufweist, die streng größer als die Querabmessungen der Achse ist, wobei sich die Achse in der Reling vertikal in einer zur Längsrichtung der Reling senkrechten Richtung erstreckt und durch eine Durchgangsöffnung hindurch verläuft, die oberhalb der Platte (102, 102', 102") des Befestigungsträgers mündet, so dass der Kopf (32, 32') des Bolzens sich außerhalb der Reling befindet und sich an der Nut (130) des Verriegelungs-/Entriegelungsklotzes (13, 13') positionieren kann, um mit dem Verriegelungs-/Entriegelungsrelief zusammenzuwirken und eine Verriegelungsposition an dem Anlageende (131) der Nut des Klotzes oder eine Entriegelungsposition in dem erweiterten offenen Ende (132) der Nut einzunehmen,
- ein elastisches Druckorgan (4, 4'), das dem Verriegelungs-/Entriegelungsbolzen eine vertikale Translationsbewegung in einer zur Längsrichtung des Klotzes senkrechten Richtung ermöglicht,
ii) die zum Körper des Rotationsträgers senkrechte Achse (110, 110'), bezüglich der der jeweilige Betätigungsgriff (11, 11') des Trägers (10, 10', 10") eines Befestigungsmittels zwischen einer abgesenkten Verriegelungsposition und einer angehobenen Entriegelungsposition beweglich ist, zu der Platte (102) des Trägers für den Griff (11) des ersten Befestigungsmittels proximal ist und zum distalen Ende (101') des Körpers des Trägers für den Griff (11') des zweiten Befestigungsmittels proximal ist.

2. Dachrelingvorrichtung nach Anspruch 1, **dadurch gekennzeichnet, dass** das Verriegelungs-/Entriegelungsrelief, das die Nut (130) des Verriegelungs-/Entriegelungsklotzes (13, 13') umrandet, in der Längsrichtung des Klotzes vom erweiterten offenen Entriegelungsende (132) zum Anlage-Verriegelungsende (131) der Nut (130) hin besteht:
- aus einem ersten Teil (A0) in einer geneigten Ebene, welcher ermöglicht, den Bolzen (3) in der entriegelten Position zu erfassen, danach
- aus einem ersten Abschnitt in einer geneigten Ebene (A1) und einem zweiten Abschnitt in einer geneigten Ebene (A2) mit Neigungen in unterschiedlichen Richtungen, die sich beiderseits eines Bereichs (S) befinden, wo die Höhe des Reliefs maximal ist (Hmax), danach
- aus einem Sicherheitsabschnitt der Verriegelung (A3) mit einer Höhe (h), die streng kleiner als die maximale Höhe (Hmax) des Reliefs ist.

3. Dachrelingvorrichtung nach Anspruch 2, **dadurch gekennzeichnet, dass** der Druckarm (12, 12') ein Kolben ist, der für drei Hauptpositionen der Verriegelung/Entriegelung ausgelegt ist, derart, dass:
- in einer Verriegelungsposition, wenn sich der Bolzen (3, 3') auf der Höhe des Bereichs (S) befindet, wo die Höhe des Verriegelungs-/Entriegelungsreliefs, das die Nut umrandet, maximal ist (Hmax), der Druckarm entlang einer Fluchtlinie (C) ausgerichtet ist, die dem Fluchten der Verbindungen (110, 121, 122, 110', 121', 122') zwischen dem Betätigungsgriff (11, 11'), dem Druckarm (12, 12') und dem Verriegelungs-/Entriegelungsklotz (13, 13') entspricht,
- in einer Sicherheitsposition der Verriegelung der Druckarm sich unterhalb der Fluchtlinie (C) befindet,
- in einer entriegelten Position der Druckarm sich oberhalb der Fluchtlinie (C) befindet.

4. Dachrelingvorrichtung nach einem der Ansprüche 1 bis 3, **dadurch gekennzeichnet, dass** das elastische Organ (4) eine um die Achse (30) des Bolzens (3) gewickelte Druckfeder ist und im Inneren der Reling (2) aufgenommen ist.

5. Dachrelingvorrichtung nach Anspruch 4, **dadurch gekennzeichnet, dass** der Bolzen (3) einen Anschlag (31) für die Feder (4) umfasst.

6. Dachrelingvorrichtung nach einem der Ansprüche 1 bis 3, **dadurch gekennzeichnet, dass** das elastische Druckorgan ein zusammendrückbarer Puffer (4') ist.

7. Dachrelingvorrichtung nach Anspruch 6, **dadurch gekennzeichnet, dass** der zusammendrückbare Puffer (4') eine zusammendrückbare Dichtung ist, die in einer Rille unter der Außenseite der unteren Wand der Reling (2') und auf einem Umfang, der wenigstens den Kopf (32') des Bolzens (3') umgibt, angebracht ist.

8. Dachgepäckträger für ein Kraftfahrzeug, **dadurch gekennzeichnet, dass** er mindestens zwei Dachrelingvorrichtungen nach einem der Ansprüche 1 bis 7 umfasst.

9. Verfahren zum Wechseln von einer seitlichen Anbringung zu einer Anbringung in Querrichtung eines Dachgepäckträgers, der auf einem Dach eines Kraftfahrzeugs angebracht ist, **dadurch gekennzeichnet, dass** ein Dachgepäckträger verwendet wird, der zwei Dachrelingvorrichtungen nach einem der Ansprüche 1 bis 7 umfasst, und dadurch, dass das Verfahren die folgenden Schritte umfasst:
- nachdem die verriegelbaren/entriegelbaren Befestigungsmittel jeder Reling (2A, 2B) entriegelt worden sind durch Anheben der Betätigungsgriffe (11, 11') jedes Befestigungsmittels der Vorrichtungen derart, dass der Verriegelungs-/Entriegelungsklotz (13, 13') durch einen Druckarm (12, 12') gezogen wird, bis der Kopf (32, 32') des Bolzens (3, 3') im äußersten erweiterten offenen Teil (132) der Nut (130) des Klotzes (13, 13', 13") positioniert ist, werden die Relinge (2A, 2B), die zuvor parallel zueinander und in einer seitlichen Position auf ihren jeweiligen Befestigungsträgern (10A, 10A', 10B, 10B') befestigt waren, demontiert, wobei der Träger (10A, 10B) des ersten Befestigungsmittels jeder Vorrichtung vorn seitlich auf dem Dach positioniert bleibt und der Träger (10A', 10B') des zweiten Befestigungsmittels jeder Vorrichtung hinten seitlich auf dem Dach positioniert bleibt, danach
- wird eine Reling (2A) quer angebracht, zur Befestigung eines ihrer Enden (20) an dem vorderen Befestigungsträger (10A), den sie zuvor belegt hat, in einer bezüglich dieser vorherigen Position um 90 Grad gedrehten Position und zur Befestigung ihres anderen Endes (20') an dem anderen vorderen Träger (10B) auf der entgegengesetzten Dachseite, der zuvor von einem Ende der anderen Reling (2B) belegt war, durch Positionieren des Kopfes (32, 32') des Bolzens bezüglich jedes Relingendes an dem äußersten erweiterten offenen Teil (132) der Nut (130) des Verriegelungs-/Entriegelungsklotzes für jeden betrachteten Träger (10A, 10B),
- wird die andere Reling (2B) quer angebracht, zur Befestigung eines ihrer Enden (20') an dem hinteren Befestigungsträger (10B'), den sie zuvor belegt hat, in einer bezüglich dieser vorherigen Position um 90 Grad gedrehten Position und zur Befestigung ihres anderen Endes (20) an dem anderen hinteren Träger (10A') auf der entgegengesetzten Dachseite, der zuvor von einem Ende der anderen Reling (2A) belegt war, durch Positionieren des Kopfes (32, 32') des Bolzens jedes Relingendes an dem äußersten erweiterten offenen Teil (132) der Nut (130) des Verriegelungs-/Entriegelungsklotzes für jeden betrachteten Träger (10A', 10B'),
- werden die Befestigungsmittel der Relinge (2A, 2B) verriegelt durch Absenken der Betätigungsgriffe (11, 11'), welche jedes Befestigungsmittel jeder Vorrichtung umfasst, derart, dass der Verriegelungs-/Entriegelungsklotz (13, 13') durch den Druckarm (12, 12') geschoben wird und den Bolzen an seiner Achse (30, 30') oberhalb des Kopfes (32, 32') in der Nut (130) des Klotzes erfasst, das elastische Druckorgan (4, 4') zusammengedrückt wird und den Bolzen zwingt, dem Verriegelungs-/Entriegelungsrelief, das die Nut (130) umrandet, bis zum Festhalten des Bolzens in dem Anlageende (131) der Nut (130) zu folgen.

10. Verfahren zum Wechseln von einer Anbringung in Querrichtung zu einer seitlichen Anbringung eines Dachgepäckträgers, der auf einem Dach eines Kraftfahrzeugs angebracht ist, **dadurch gekennzeichnet, dass** ein Dachgepäckträger verwendet wird, der zwei Dachrelingvorrichtungen nach einem der Ansprüche 1 bis 7 umfasst, und dadurch, dass das Verfahren die folgenden Schritte umfasst:
- nachdem die verriegelbaren/entriegelbaren Befestigungsmittel jeder Reling (2A, 2B) entriegelt worden sind durch Anheben der Betätigungsgriffe (11, 11') jedes Befestigungsmittels der Vorrichtungen derart, dass der Verriegelungs-/Entriegelungsklotz (3, 3') durch einen Druckarm (12, 12') gezogen wird, bis der Kopf (32, 32') des Bolzens (3, 3') im äußersten erweiterten offenen Teil (132) der Nut (130) des Klotzes positioniert ist, werden die Relinge (2A, 2B), die zuvor parallel zueinander und in einer Querposition auf den jeweiligen Befestigungsträgern (10A, 10B, 10A', 10B') befestigt waren, demontiert, wobei die Träger auf dem Dach befestigt bleiben, danach
- wird eine Reling (2A) längs angebracht, zur Befestigung eines ihrer Enden an dem vorderen Befestigungsträger (10A), den sie zuvor belegt hat, in einer bezüglich dieser vorherigen Position um 90 Grad gedrehten Position und zur Befestigung ihres anderen Endes an dem hinteren Träger (10A') auf derselben Dachseite, der zuvor von einem Ende der anderen Reling (2B) belegt war, durch Positionieren des Kopfes (32, 32') des Bolzens bezüglich jedes Endes der Reling (2A) an dem äußersten erweiterten offenen Teil (132) der Nut (130) des Verriegelungs-/Entriegelungsklotzes für jeden betrachteten Träger (10A, 10A'),
- wird die andere Reling (2B) längs angebracht, zur Befestigung eines ihrer Enden an dem hinteren Befestigungsträger (10B'), den sie zuvor belegt hat, in einer bezüglich dieser vorherigen Position um 90 Grad gedrehten Position und zur Befestigung ihres anderen Endes an dem vorderen Träger (10B) auf derselben Dachseite, der zuvor von einem Ende der anderen Reling (2A) belegt war, durch Positionieren des Kopfes (32, 32') des Bolzens bezüglich jedes Relingendes an dem äußersten erweiterten offenen Teil (132) der Nut des Verriegelungs-/Entriegelungsklotzes für jeden betrachteten Träger (10B, 10B'),
- werden die Befestigungsmittel der Relinge (2A, 2B) verriegelt durch Anheben der Betätigungsgriffe (11, 11'), welche jede Vorrichtung umfasst, derart, dass der Verriegelungs-/Entriegelungsklotz durch einen Druckarm (12, 12') geschoben wird und den Bolzen (3, 3') an seiner Achse (30, 30') oberhalb des Kopfes (32, 32') in der Nut (130) des Klotzes erfasst, das elastische Organ (4, 4') zusammengedrückt wird und den Bolzen zwingt, dem Verriegelungs-/Entriegelungsrelief, das die Nut (130) umrandet, bis zum Festhalten des Bolzens in dem Anlageende (131) der Nut zu folgen.

## Claims

1. Roof bar device comprising a removable roof bar (2, 2') and first lockable/unlockable means (1) for attaching one of the ends of the bar and second lockable/unlockable means (1') for attaching the other end of the bar, **characterized in that**:
i) each lockable/unlockable attachment means comprises:
- an attachment support (10, 10', 10") comprising:
a) a body (10, 10', 10") extending longitudinally between a distal end (101, 101') and an opposite proximal end relative to one end (20, 20') of the bar (2, 2'), said proximal end comprising a plate (102, 102' 102") for receiving one end of the bar, and
b) an operating handle (11, 11') supported by the body (100, 100') of said support (10, 10', 10"), rotatably mounted about a shaft (110, 110') perpendicular to the body of the support between a lowered locked position and a raised unlocked position, and
c) a pressure arm (12, 12') housed in the body of said support, rigidly connected to the operating handle for movement therewith, and
d) a locking/unlocking wedge (13, 13') rigidly connected to said pressure arm (12, 12') for longitudinal translation therewith, comprising a part capable of extending at least partially on the surface of said plate and comprising a through-slot (130), said slot extending longitudinally between a closed end (131) and a flared open end (132), and the wedge comprising a lower face (137) comprising a locking/unlocking protrusion (A0, A1, A2, A3, 133, 134) along the edge of said slot,
- a locking/unlocking pin (3, 3'), situated in one of the ends of the bar, comprising a shaft (30, 30') the lower end of which is provided with a head (32, 32') having a width that is strictly greater than the transverse dimensions of said shaft, said shaft extending vertically in the bar, in a direction perpendicular to the longitudinal direction of the bar, and passing through a through-hole emerging above the plate (102, 102', 102") of the attachment support, so that the head (32, 32') of the pin is outside the bar and is capable of being positioned in the slot (130) of the locking/unlocking wedge (13, 13') in order to interact with said locking/unlocking protrusion and occupy a locked position in the closed end (131) of the slot of the wedge or an unlocked position in the flared open end (132) of said slot,
- a resilient compression member (4, 4') allowing the locking/unlocking pin to translate vertically in a direction perpendicular to the longitudinal direction of said wedge,
ii) the shaft (110, 110') perpendicular to the body of the rotation support, relative to which the respective operating handle (11, 11') of the support (10, 10', 10") of an attachment means is movable between a lowered locked position and a raised unlocked position, is proximal to the plate (102) of the support with respect to the handle (11) of the first attachment means, and is proximal to the distal end (101') of the body of the support with respect to the handle (11') of the second attachment means.

2. Roof bar device according to Claim 1, **characterized in that** said locking/unlocking protrusion along the edge of the slot (130) of the locking/unlocking wedge (13, 13') comprises, in the longitudinal direction of the wedge from the unlocked flared open end (132) to the locked closed end (131) of the slot (130):
- a first inclined-plane part (A0) making it possible to grip the pin (3) in the unlocked position, then
- a first inclined-plane portion (A1) and a second inclined-plane portion (A2), inclined in different directions, situated on either side of an area (S) in which the height of said protrusion is at a maximum (Hmax), then
- a locking safety portion (A3) having a height (h) strictly less than the maximum height (Hmax) of said protrusion.

3. Roof bar device according to Claim 2, **characterized in that** the pressure arm (12, 12') is a piston configured for three main locked/unlocked positions so that:
- in the locked position when the pin (3, 3') is in line with the area (S) in which the height of the locking/unlocking protrusion along the edge of the slot is at maximum (Hmax), the pressure arm is aligned along an alignment line (C) corresponding to the alignment of the connections (110, 121, 122, 110', 121', 122') between the operating handle (11, 11'), the pressure arm (12, 12'), and the locking/unlocking wedge (13, 13'),
- in the locked safety position, the pressure arm is below said alignment line (C),
- in the unlocked position, the pressure arm is above said alignment line (C).

4. Roof bar device according to any one of Claims 1 to 3, **characterized in that** said resilient member (4) is a compression spring coiled around the shaft (30) of the pin (3) and is housed inside the bar (2).

5. Roof bar device according to Claim 4, **characterized in that** the pin (3) comprises a stop (31) for said spring (4).

6. Roof bar device according to any one of Claims 1 to 3, **characterized in that** said resilient compression member is a compressible pad (4').

7. Roof bar device according to Claim 6, **characterized in that** said compressible pad (4') is a compressible seal fitted in a groove under the outer face of the lower wall of the bar (2'), and over a perimeter at least surrounding the head (32') of the pin (3').

8. Roof luggage carrier for a motor vehicle, **characterized in that** it comprises at least two roof bar devices according to any one of Claims 1 to 7.

9. Method for switching from a lateral installation to a transverse installation of a roof luggage carrier installed on a roof of a motor vehicle, **characterized in that** a roof luggage carrier comprising two roof bar devices according to any one of Claims 1 to 7 is used, and **in that** said method comprises the following steps:
- having unlocked the lockable/unlockable attachment means of each bar (2A, 2B) by raising the operating handles (11, 11') of each attachment means of the devices so that the locking/unlocking wedge (13, 13') is pulled by a pressure arm (12, 12') until the head (32, 32') of the pin (3, 3') is positioned in the flared open end part (132) of the slot (130) of the wedge (13, 13', 13"), the bars (2A, 2B), which were previously attached parallel to each other and in a lateral position on their respective attachment supports (10A, 10A', 10B, 10B'), are removed, the support (10A, 10B) of the first attachment means of each device remaining positioned laterally at the front on the roof and the support (10A', 10B') of the second attachment means of each device remaining positioned laterally at the rear on the roof, then
- one bar (2A) is installed transversely for attachment of one of its ends (20) to the front attachment support (10A) that it occupied previously, in a position rotated by 90 degrees relative to this previous position, and for attachment of its other end (20') to the other front support (10B) on the opposite side of the roof that was previously occupied by one end of the other bar (2B), by positioning the head (32, 32') of the pin relative to each bar end in the flared open end part (132) of the slot (130) of the locking/unlocking wedge for each support (10A, 10B) in question,
- the other bar (2B) is installed transversely for attachment of one of its ends (20') to the rear attachment support (10B') that it occupied previously, in a position rotated by 90 degrees relative to this previous position, and for attachment of its other end (20) to the other rear support (10A') on the opposite side of the roof that was previously occupied by one end of the other bar (2A), by positioning the head (32, 32') of the pin relative to each bar end in the flared open end part (132) of the slot (130) of the locking/unlocking wedge for each support in question (10A', 10B'),
- the attachment means of the bars (2A, 2B) are locked by lowering the operating handles (11, 11') that each attachment means of each device comprises, so that the locking/unlocking wedge (13, 13') is pushed by the pressure arm (12, 12') and grips the pin on the shaft (30, 30') thereof above the head (32, 32'), in the slot (130) of the wedge, and the resilient compression member (4, 4') compresses and forces the pin to follow the locking/unlocking protrusion along the edge of the slot (130) until the pin is held in the closed end (131) of the slot (130).

10. Method for switching from a transverse installation to a lateral installation of a roof luggage carrier installed on a roof of a motor vehicle, **characterized in that** a roof luggage carrier comprising two roof bar devices according to any one of Claims 1 to 7 is used, and **in that** said method comprises the following steps:
- having unlocked the lockable/unlockable attachment means of each bar (2A, 2B) by raising the operating handles (11, 11') of each attachment means of the devices so that the locking/unlocking wedge (3, 3') is pulled by a pressure arm (12, 12') until the head (32, 32') of the pin (3, 3') is positioned in the flared open end part (132) of the slot (130) of the wedge, the bars (2A, 2B), which were previously attached parallel to each other and in a transverse position on the respective attachment supports (10A, 10B, 10A', 10B'), are removed, said supports remaining attached to the roof, then
- one bar (2A) is installed longitudinally for attachment of one of its ends to the front attachment support (10A) that it occupied previously, in a position rotated by 90 degrees relative to this previous position, and for attachment of its other end to the rear support (10A') on the same side of the roof that was previously occupied by one end of the other bar (2B), by positioning the head (32, 32') of the pin relative to each end of the bar (2A) in the flared open end part (132) of the slot (130) of the locking/unlocking wedge for each support (10A, 10A') in question,
- the other bar (2B) is installed longitudinally for attachment of one of its ends to the rear attachment support (10B') that it occupied previously, in a position rotated by 90 degrees relative to this previous position, and for attachment of its other end to the front support (10B) on the same side of the roof that was previously occupied by one end of the other bar (2A), by positioning the head (32, 32') of the pin relative to each bar end in the flared open end part (132) of the slot of the locking/unlocking wedge for each support (10B, 10B') in question,
- the attachment means of the bars (2A, 2B) are locked by raising the operating handles (11, 11') that each device comprises, so that the locking/unlocking wedge is pushed by a pressure arm (12, 12') and grips the pin (3, 3') on the shaft (30, 30') thereof above the head (32, 32'), in the slot (130) of the wedge, and the resilient member (4, 4') compresses and forces the pin to follow the locking/unlocking protrusion along the edge of the slot (130) until the pin is held in the closed end (131) of the slot.
